**Europäisches Patentamt**

**European Patent Office**

**Office européen des brevets**

(19)

(11) Veröffentlichungsnummer: **0 405 364 A1**

(12) **EUROPÄISCHE PATENTANMELDUNG**

(21) Anmeldenummer: 90111902.4

(22) Anmeldetag: 22.06.90

(51) Int. Cl.⁵: **H01B 1/08, C01G 9/02**

(30) Priorität: 26.06.89 JP 160823/89

(43) Veröffentlichungstag der Anmeldung:
02.01.91 Patentblatt 91/01

(84) Benannte Vertragsstaaten:
AT BE CH DE DK ES FR GB GR IT LI NL SE

(71) Anmelder: **METALLGESELLSCHAFT Aktiengesellschaft**
**Reuterweg 14**
**D-6000 Frankfurt am Main(DE)**

Anmelder: **MITSUI MINING & SMELTING CO., LTD.TD.**
**2-1-1, Nihonbashi-Muromachi**
**Chuo-ku, Shinjuku-ku Tokyo(JP)**

(72) Erfinder: **Hayashi, Takao**
**5-4-5 Sako-cho, Hikoshima**
**Shimonoseki-shi, Yamaguchi-ken(JP)**
Erfinder: **Sato, Norihiro**
**6-7-13, Sako-cho, Hikoshima**
**Shimonoseki-shi, Yamaguchi-ken(JP)**
Erfinder: **Omotani, Chikara**
**96 Oaza Yamada**
**Shimonoseki-shi, Yamaguchi-ken(JP)**
Erfinder: **Hosoi, Manabu**
**194 Kamikomachi**
**Omiya-shi, Saitama-ken(JP)**
Erfinder: **Kasahara, Nobuyoshi**
**812-9, Mizuno**
**Sayama-shi, Saitama-ken(JP)**

(74) Vertreter: **Rieger, Harald, Dr.**
**Reuterweg 14**
**D-6000 Frankfurt am Main(DE)**

(54) **Nadelförmiges leitendes Zinkoxid und Verfahren zu seiner Erzeugung.**

(57) Es wird ein Pulver aus nadelförmigem, elektrisch leitendem Zinkoxid beschrieben, das 0,005 bis 5 Gewichtsteile mindestens eines Oxids aus der Gruppe Zinnoxid, Galliumoxid, Indiumoxid oder Aluminiumoxid als Dotierungsstoff pro 100 Gewichtsteile Zinkoxid enthält. Ferner wird ein Kalzinationsverfahren zur Herstellung von nadelförmigem, elektrisch leitendem Zinkoxid beschrieben.

EP 0 405 364 A1

## NADELFÖRMIGES LEITENDES ZINKOXID UND VERFAHREN ZU SEINER ERZEUGUNG

(Gebiet der Erfindung)

Die Erfindung betrifft einen aus nadelförmigem elektrisch leitendem Zinkoxid bestehenden Füllstoff für Papier, Kunststoff, Gummi, Harz, Anstrichstoffe oder dergleichen, ferner ein Verfahren zum Erzeugen desselben, insbesondere einen aus nadelförmigem elektrisch leitendem Zinkoxid bestehenden Füllstoff, der einen niedrigen spezifischen elektrischen Volumenwiderstand besitzt und einer ihn enthaltenden Grundmasse eine ausgezeichnete Leitfähigkeit pro Volumeneinheit des Füllstoffes erteilt, sowie ein Verfahren zum Erzeugen desselben.

(Stand der Technik)

Als feine Pulver zum Leitfähigmachen von Kunststoffen und Anstrichstoffen, denen das Pulver zugesetzt wird, sind beispielsweise Pulver aus Zinnoxid oder aus mit Zinnoxid überzogenem Zinkoxid, Titanoxid, Aluminiumoxid oder dergleichen bekannt, ferner mit elektrisch leitendem Zinnoxid überzogene Faserstoffe, z. B. aus Kaliumtitanat, Gips und Glas.

Es ist bekannt, daß Kunststoffen eine hohe elektrische Leitfähigkeit nur erteilt werden kann, wenn ihnen eine so große Pulvermenge zugesetzt wird, daß alle einander benachbarten Teilchen einander berühren. Daher hat ein teures leitendes Pulver nur einen sehr begrenzten Anwendungsbereich.

Um diesen Nachteil zu vermeiden, ist vorgeschlagen worden, ein nadelförmiges Pulver der vorgenannten Art zu verwenden, das eine viel größeres Seitenverhältnis hat als ein kugeliges Pulver und das die Berührungswahrscheinlichkeit von Teilchen des zugesetzten, eine elektrische Leitfähigkeit erteilenden Füllstoffes selbst bei dessen Verwendung in einer kleineren Menge erhöht.

Alle diese nadelförmigen Pulver werden jedoch erzeugt, indem eine Kernsubstsnz mit einer elektrisch leitenden Substanz überzogen wird. Ein derartiges Pulver braucht zwar nur in einer kleineren Menge verwendet werden, doch kommt es bei der Zugabe dieses Pulvers zu leitfähig zu machenden Kunststoffen und Anstrichstoffen leicht zum Ablösen der Überzugsschicht von der Kernsubstanz, so daß die gewünschte Leitfähigkeit kaum erzielt werden kann.

Beispielsweise in den japanischen Offenlegungsschriften Sho 58-161923, Sho 58-145620, Sho 55-162477 und Sho 59-97531, in der JP-AS Sho-55-19897 und in der US-PS 3 538 022 sind verschiedene Verfahren zum Erzeugen von elektrisch leitenden Zinkoxiden angegeben. Die nach diesen Verfahren erhaltenen Pulver bestehen jedoch nicht aus nadelförmigen leitenden Zinkoxidteilchen, sondern sind kugelig oder spratzig. Es ist bekannt, nadelförmiges Zinkoxid durch eine Reaktion in der Gasphase zu erzeugen, wie dies in dem von der Kyoritsu Publishing Co., Ltd. heraus gegebenen "Handbook of Crystallographic Engineerings" auf S. 720 oder im "Bulletin of the Society of the Ceramic Industry", 1984, $\underline{92(4)}$ , auf S. 227 angegeben ist. Keine dieser Veröffentlichungen betrifft jedoch elektrisch leitende Zinkoxide.

(Durch die Erfindung zu lösende Probleme)

Daher haben die Erfinder verschiedene Untersuchungen mit dem Ziel durchgeführt, die nachstehenden Aufgaben zu lösen, und sind dabei zu der vorliegenden Erfindung gelangt:

(i) Das elektrisch leitende Pulver soll einen ausgezeichneten Weißgrad haben und soll den spezifischen elektrischen Volumenwiderstand eines Grundwerkstoffes, beispielsweise eines Harzes, beträchtlich herabsetzen, selbst wenn das Pulver dem Grundwerkstoff nur in einer kleinen Menge zugesetzt wird.

(ii) Das dem Grundwerkstoff zuzusetzende leitende Pulver darf nie seine Leitfähigkeit verlieren, beispielsweise weil sich ein leitender Überzug beim Vermischen von einer damit versehenen Oberfläche einer Kernsubstanz ablöst.

(Mittel zum Lösen der Probleme)

Von den vorgenannten Gesichtspunkten aus haben die Erfinder in ausgedehnten Versuchen ermittelt, wie ein aus nadelförmigem elektrisch leitendem Zinkoxid bestehender Füllstoff beschaffen sein muß und wie er in einem nassen Verfahren erzeugt werden kann. Dabei ist es den Erfindern gelungen, einen aus Zinkoxid bestehenden Füllstoff in Form von weißen Nadeln, die eine geeignete elektrische Leitfähigkeit haben, in dem vorliegenden Verfahren zu erzeugen, in dem eine Lösung, die eine Alkalizinkatverbindung und eine wasserlösliche Verbindung mindestens eines der Metalle Zink, Gallium, Indium und Aluminium enthält, mit einer anorganischen Säure, wie Schwefelsäure, Salpetersäure oder Salzsäure, neutralisiert wird, worauf die erhaltenen Mischfällprodukte abfiltriert, gewaschen und getrocknet und dann in einer reduzierend wirkenden Atmosphäre kalziniert werden. Die Erfinder haben ferner festgestellt, daß das Pulver einen sehr niedrigen spezifischen elektrischen Volumenwiderstand hat und es enthaltenden Harzen oder Anstrichstoffen usw. eine ausgezeichnete elektrische Leitfähigkeit pro Gewichtseinheit des Pulvers verleiht, daß es nicht zu Problemen hinsichtlich der Qualität und Toxizität führt und daß es eine billige, weiße, elektrisch leitende Substanz ist.

Die Erfindung betrifft die Erzeugung von aus nadelförmigem elektrisch leitendem Zinkoxid bestehenden Füllstoffen in einem Verfahren, in dem eine Lösung, die eine Alkalizinkatverbindung und eine wasserlösliche Verbindung mindestens eines der Metalle Zinn, Gallium, Indium und Aluminium in einem solchen Mengenverhältnis enthält, daß nach dem Kalzinieren eine Zusammensetzung erhalten wird, die 0,005 bis 5 Gewichtsprozent mindestens eines der Metalloxide Zinnoxid, Galliumoxid, Indiumoxid und Aluminiumoxid als Dotierungsstoff pro 100 Gewichtsteile Zinkoxid enthält, mit einer anorganischen Säure, wie Schwefelsäure, Salpetersäure oder Salzsäure, neutralisiert wird, die erhaltenen Mischfällprodukte abfiltriert und zum Entfernen von verunreinigenden Ionen mit Wasser gewaschen und bei Temperaturen im Bereich von 80 bis 150 °C getrocknet und dann in einer wasserstoffhaltigen Atmosphäre bei 400 bis 800 °C kalziniert werden.

Nachstehend wird der Erfindungsgegenstand näher erläutert.

Als Alkalizinkatverbindungen werden bevorzugt Natriumzinkat und Kaliumzinkat verwendet, weil sie leicht erhältlich sind und leicht synthetisch erzeugt werden können. Die als Dotierungsstoffe verwendeten, wasserlöslichen Metallverbindungen können beliebige Verbindungen der genannten Metalle sein, sofern sie durch Kalzinieren in Zinnoxid, Galliumoxid, Indiumoxid bzw. Aluminiumoxid umgewandelt werden können. Beispiele dieser Verbindungen sind Chloride, Nitrate, Sulfate und Acetate des Zinns, Galliums, Indiums und Aluminiums sowie Alkalimetallsalze von Oxosäuren dieser Metalle und Kombinationen von zweien oder mehreren dieser Substanzen.

Die wasserlösliche Metallverbindung wird in einer solchen Menge verwendet, daß das entsprechende Oxid nach dem Kalzinieren in einer Menge von 0,005 bis 5 Gewichtsteilen, vorzugsweise von 0,01 bis 1 Gewichtsteil, pro 100 Gewichtsteile Zinkoxid vorhanden ist. Diese Dotierungsstoffe können eine gewisse elektrische Leitfähigkeit ergeben, wenn nur einer von ihnen zugesetzt wird. Vorzugsweise werden sie jedoch in Kombination zugesetzt. Wenn die Menge der Dotierungsstoffe unter der Untergrenze liegt, zeigt das so erhaltene Zinkoxidpulver im Lauf der Zeit eine starke Veränderung seiner elektrischen Leitfähigkeit, so daß Produkte von beständiger Qualität nur schwer erzeugt werden können. Bei einem Überschreiten der Obergrenze hat die Färbung des erhaltenen elektrisch leitfähigen Zinkoxidpulvers eine schwärzliche Tönung und hat das Pulver eine geringere elektrische Leitfähigkeit.

Vor dem Neutralisieren der Lösung, die eine Alkalizinkatverbindung und eine wasserlösliche Verbindung mindestens eines der Metalle Zinn, Gallium, Indium und Aluminium enthält, mit einer anorganischen Säure wird gemäß der Erfindung der Lösung Ätznatron oder Ätzkali in einer solchen Menge zugesetzt, daß das Molverhältnis von Alkali zu Zink im Bereich von 5 bis 30, vorzugsweise von 7 bis 15, liegt.

Wenn das Molverhältnis von Alkali zu Zink unter der vorgenannten Untergrenze liegt, kann schon eine kleine Veränderung der Temperatur und der Konzentration der genannten Lösung zu einer Hydrolyse führen, so daß die Aufgabe der Erfindung nur noch schwer gelöst werden kann, und ist es sehr schwierig, nadelförmige Mischfällprodukte zu erzielen, weil eine starke Neigung zur Bildung von kugeligem oder spratzigem Zinkoxidpulver besteht.

Wenn dagegen das Molverhältnis von Alkali zu Zink über der Obergrenze liegt, wird für die Neutralisierung eine größere Menge der anorganischen Säure benötigt und bleibt in dem erzeugten Zinkoxid auch eine größere Alkalimenge zurück, so daß das erhaltene Zinkoxidpulver einen höheren elektrischen Widerstand hat.

Die anfängliche Konzentration der Zinkionen in dem Neutralisierungsreaktionssystem beträgt vorzugsweise 0,1 bis 4 mol/l. Eine Zinkionenkonzentration unter der Untergrenze vermindert die Ausbeute an Zinkoxid und erhöht die Abwassermenge und damit die Erzeugungskosten. Eine Zinkionenkonzentration über der Obergrenze führt dagegen zur Bildung von spratzigem oder schuppigem Zinkoxid.

Für die Neutralisierungsreaktion wird als anorganische Säure vorzugsweise Schwefelsäure, Salpetersäure und Salzsäure verwendet, weil diese Säuren einfach praktisch sind und leicht in hoher Reinheit erhältlich sind.

Zum Erzeugen eines nadelförmigen elektrisch leitenden Zinkoxidpulvers mit den gewünschten Eigenschaften liegt die Konzentration der für die Neutralisierungsreaktion verwendeten anorganischen Säure

3

vorzugsweise im Bereich von 5 bis 20 Gew.-%.

Der am Ende der Neutralisierungsreaktion vorhandene pH-Wert wird so gesteuert, daß er je nach der Art der verwendeten Dotierungsstoffe und der am Ende der Neutralisierung vorhandenen Konzentration der Ionen der anorganischen Säure auf einem gewünschten Wert im Bereich von 7 bis 12 liegt. Das heißt, daß der pH-Wert des Reaktionssystems so gewählt werden muß, daß er in einem Bereich liegt, in dem der Dotierungsstoff genügend hydrolysiert wird, und daß der pH-Wert bei vollständig durchgeführter Neutralisierung in einem Bereich liegt, in dem keine basischen Zinkverbindungen gebildet werden.

Die bei der Neutralisierungsreaktion gebildeten Mischfällprodukte werden in bekannter Weise abfiltriert und werden mit Wasser gewaschen, bis das Filtrat eine elektrische Leitfähigkeit von höchstens 300 μS/cm hat, und werden bei einer Temperatur im Bereich von 80 bis 150 °C getrocknet. Die getrockneten Mischfällprodukte, die beispielsweise in Form von Schüttgut, Klumpen oder Pellets vorliegen, werden dann ohne Pulverisierung in einer Wasserstoffgas enthaltenden, reduzierend wirkenden Atmosphäre bei einer Temperatur von 400 bis 800 °C kalziniert. Damit ein Verlust von Zinkoxid durch Verflüchtigung weitgehend vermieden wird, liegt die Kalziniertemperatur vorzugsweise im Bereich von 400 bis 550 °C.

Die in dem erfindungsgemäßen Verfahren gebildeten Mischfällprodukte bestehen im mischgefällten Zustand im wesentlichen aus Zinkoxid, so daß sie beim Kalzinieren in einer Wasserstoff enthaltenden, reduzierend wirkenden Atmosphäre nur zu einem geringfügigen Verdampfen von Wasser führen und daher der Wasserdampfpartialdruck niedrig bleibt. Infolgedessen ist in der zum Kalzinieren verwendeten, reduzierend wirkenden Atmosphäre nur eine geringere Wasserstoffmenge erforderlich, d. h., daß die Mischfällprodukte in einer Atmosphäre kalziniert werden können, die eine niedrigere Wasserstoffkonzentration hat oder in einem geringeren Durchsatz verwendet wird.

Der gemäß der Erfindung erzeugte Füllstoff aus nadelförmigem elektrisch leitendem Zinkoxid ist ein weißes Pulver mit einem Seitenverhältnis von 10 bis 200, vorzugsweise 20 bis 100, und einem spezifischen elektrischen Volumenwiderstand von $10^0$ bis $10^2$ Ohm.cm. Bei einem Seitenverhältnis unter 10 kann man im allgemeinen die bei nadelförmigen Füllstoffen typische gute elektrische Leitfähigkeit in einem Grundwerkstoff auch bei Verwendung der Füllstoffe in geringen Mengen nicht erzielen. Bei einem Seitenverhältnis über 200 wird dagegen angenommen, daß der Füllstoff in Grundwerkstoffen, wie Kunststoff oder Gummi, nur ungenügend dispergiert werden kann.

Beispiel 1

81,3 kg 99,8 % reines Zinkchlorid wurden in 1,5 l einer wäßrigen Lösung gelöst, die 470 g Ätznatron (95 % NaOH) enthielt, so daß das Molverhältnis von NaOH zu Zinn 11,2 betrug. Dann wurden 0,74 g 98 % reines Zinn(IV)chlorid und 2,22 g 96 % reines Aluminiumchlorid der genannten Lösung zugesetzt und darin gelöst. Danach wurde durch Zugabe von Wasser die Zinkkonzentration auf 0,3 mol/l eingestellt. Jetzt hatte die Lösung einen pH-Wert von 13,3. Danach wurden während eines Zeitraums von 5 min 2 kg einer 20%igen Schwefelsäurelösung unter Rühren zugesetzt. In diesem Zeitpunkt war die Lösung noch durchsichtig und hatte sie einen pH-Wert von 12,6. Zum vollständigen Durchführen der Neutralisierungsreaktion wurde danach während eines Zeitraums von 120 min eine 5%ige Schwefelsäurelösung zugesetzt, bis ein pH-Wert von 10,5 erreicht war, wobei die Lösung auf einer Temperatur von 60 °C gehalten wurde. Die dabei gebildeten Mischfällprodukte wurden in bekannter Weise abfiltriert und wurden mit Wasser gewaschen, bis die elektrische Leitfähigkeit des Filtrats höchstens 300 μS/cm betrug, und wurden dann an der Luft bei 105 °C getrocknet. Danach wurden sie in einer Wasserstoffatmosphäre 60 min bei 500 °C kalziniert, wobei 78 g Zinkweißpulver erhalten wurden.

Das Zinkweißpulver enthielt 0,45 % Zinnoxid und 0,89 % Aluminiumoxid. Die Betrachtung des Zinkweißpulvers mit einem Rasterelektronenmikroskop ergab, daß das Zinkweißpulver nadelförmig war und einen kleineren Durchmesser von 0,2 μm und einen größeren Durchmesser von 5 μm, d. h. ein Seitenverhältnis von 25, hatte. Es hatte einen ausgezeichneten spezifischen elektrischen Volumenwiderstand von nur $1,2.10^1$ Ohm.cm. Die erzielten Ergebnisse sind in der Tabelle I zusammengestellt.

Beispiel 2

162,76 g 99,8 % reines Zinkchlorid wurden in 1,0 l einer wäßrigen Lösung gelöst, die 640 g 95 % reines NaOH enthielt, so daß das Molverhältnis von NaOH zu Zn 8,1 betrug. 1,48 g 98 % reines Zinn(IV)-chlorid und 1,22 g 99,9 % reines Galliumchlorid wurden dieser Lösung zugesetzt und darin gelöst. Dann wurde die Lösung durch Zugabe von Wasser auf eine Zinkkonzentration von 1,33 mol/l eingestellt. Danach

4

wurde während eines Zeitraums von 5 min der Lösung unter Rühren eine Schwefelsäurelösung mit einer Konzentration von 20 Gew.-% zugesetzt, bis der pH-Wert der Lösung 12,5 betrug. Danach wurde zum vollständigen Durchführen der Neutralisierungsreaktion während eines Zeitraums von 120 min unter Rühren eine Schwefelsäurelösung mit einer Konzentration von 5 Gew.-% zugesetzt, bis der pH-Wert der Lösung 8,5 betrug, wobei die Temperatur der Lösung auf 20 °C gehalten wurde. Danach wurden in derselben Arbeitsweise wie im Beispiel 1 160 g eines nadelförmigen elektrisch leitenden Pulvers gebildet, das 0,48 % Zinnoxid und 0,37 % Galliumoxid enthielt und das einen kleineren Durchmesser von 0,05 μm und einen größeren Durchmesser von 3 μm, d. h. ein Seitenverhältnis von 60, hatte und dessen spezifischer elektrischer Volumenwiderstand 7.10° Ohm.cm betrug.

Tabelle I

| | | Beispiel 1 | | Beispiel 2 | |
|---|---|---|---|---|---|
| Ausgangslösung | | | | | |
| Zinksalz (Art/g) | | ZnCl₂ | 81,2 | ZnCl₂ | 162 |
| Zinkkonzentration (M/l) | | | 0,3 | | 1,33 |
| Alkali (Art/g) | | NaOH | 447 | NaOH | 608 |
| Molverhältnis NaOH/Tn | | | 11,2 | | 8,1 |
| Dotierungsstoff (Art/g) | | SnCl₄ | 0,73 | SnCl₄ | 1,45 |
| | | AlCl₃ | 2,13 | GaCl₃ | 1,22 |
| Neutralisation | | | | | |
| pH-Wert des Reaktionssystems: | | | | | |
| zu Beginn | | | 13,3 | | - |
| im Verlauf | | | 12,6 | | 12,5 |
| am Ende | | | 10,5 | | 8,5 |
| Trockentemp. (°C) | | | 105 | | 105 |
| Kalzination | | | | | |
| Temp. (°C) | | | 500 | | 500 |
| Zeit (min) | | | 60 | | 60 |
| Atmosphäre | | | H₂ | | H₂ |
| Zinkoxidprodukt | | | | | |
| Zusammensetzung (Gew.-%) | | SnO₂ | 0,45 | SnO₂ | 0,48 |
| | | Al₂O₃ | 0,89 | Ga₂O₃ | 0,37 |
| kleinerer Durchmesser (μm) | | | 0,2 | | 0,05 |
| größerer Durchmesser (μm) | | | 5 | | 3 |
| Seitenverhältnis (größerer Durchm./kleinerer Durchm.) | | | 25 | | 60 |
| spezifischer elektrischer Volumenwiderstand (Ohm.cm) | | 1,2.10¹ | | 7.10° | |

Vergleichsbeispiel 1

30 Gewichtsteile des im Beispiel 1 erhaltenen nadelförmigen elektrisch leitenden Zinkoxids (spezifischer elektrischer Volumenwiderstand 1,2.10¹ Ohm.cm) wurden zusammen mit 70 Gewichtsteilen PVC-Harzpulver geknetet und dann unter Erhitzung zu einer 20 μm dicken, weißen PVC-Folie ausgewalzt, deren spezifischer elektrischer Volumenwiderstand $2.10^5$ Ohm.cm betrug. Die Ergebnisse sind in der Tabelle II angegeben.

30 bzw. 70 Gewichtsteile übliches kugeliges elektrisch leitendes Zinkoxid (spezifischer elektrischer Volumenwiderstand $1,2.10^0$ Ohm.cm) wurden mit 70 bzw. 30 Gewichtsteilen PVC-Harzpulver vermischt und geknetet. Die so erhaltenen Gemische wurden unter Erhitzung zu 20 μm dicken, weißen PVC-Folien ausgewalzt, deren spezifischer elektrischer Volumenwiderstand $1.10^{11}$ bzw. $2.10^5$ Ohm.cm betrug. Die Ergebnisse sind in der Tabelle II zusammengestellt.

Aus den im Vergleichsbeispiel erhaltenen Ergebnissen geht hervor, daß der spezifische elektrische Volumenwiderstand des nadelförmigen elektrisch leitenden Zinkoxids gemäß der Erfindung zehnmal so hoch ist wie der des üblichen kugeligen elektrisch leitenden Zinkoxids, das nadelförmige Zinkoxid aber der es enthaltenden Grundmasse eine unerwartet hohe elektrische Leitfähigkeit verleiht, da dieses nadelförmige Zinkoxid enthaltende PVC-Folie einen viel niedrigeren spezifischen elektrischen Volumenwiderstand hatte, der nur 1/5000 des spezifischen elektrischen Volumenwiderstandes der PVC-Folie betrug, die in derselben Menge das übliche kugelige elektrisch leitende Zinkoxid enthielt.

Nachstehend werden für das in diesem Vergleichsbeispiel verwendete kugelige elektrisch leitende Zinkoxid ein Erzeugungsverfahren, eine Zusammensetzung und Kennwerte angegeben.

Erzeugungsverfahren: Durch eine neutralisierende Reaktion einer Zinkchlorid, Zinnchlorid und Galliumchlorid enthaltenden wäßrigen Lösung mit Ätznatron (Natriumhydroxid) werden Mischfällprodukte gebildet, die in einer Wasserstoffatmosphäre bei 500 °C kalziniert werden.

Zusammensetzung: $ZnO/SnO_2/Ga_2O_3$ = 100/0,5/0,4 Gewichtsteile

Durchschnittliche Korngröße: 0,8 μm

Spezifische Oberfläche: 6,7 m²/g

Tabelle II

| Form des elektrisch leitenden Zinkoxids | Mengenanteil (Gew.%) | Spezifischer elektrischer Volumenwiderstand der Folie (Ohm.cm) |
|---|---|---|
| nadelförmig | 30 | $2.10^5$ |
| kugelig | 30 | $1.10^{11}$ |
| kugelig | 70 | $2.10^5$ |

(Vorteile der Erfindung)

(i) Die nadelförmigen elektrisch leitenden Zinkoxide gemäß der Erfindung haben selbst eine gute elektrische Leitfähigkeit und können einem sie auch nur in einer kleinen Menge enthaltenden Grundwerkstoff, wie Harz, Gummi oder Anstrichstoff, eine ausgezeichnete elektrische Leitfähigkeit erteilen. Insbesondere hat es sich gezeigt, daß ein das nadelförmige elektrisch leitende Zinkoxid enthaltendes Harz dank der Nadelform des Zinkoxids im Vergleich mit einem ein übliches kugeliges elektrisch leitendes Zinkoxid in derselben Menge enthaltenden Harz eine ausgezeichnete elektrische Leitfähigkeit besitzt.

(ii) Die elektrische Leitfähigkeit des nadelförmigen elektrisch leitenden Zinkoxids ist auf einen Dotierungsstoff zurückzuführen, so daß es bei dem nadelförmigen elektrisch leitenden Zinkoxid nicht vorkommen kann, daß infolge von mechanischen Einwirkungen, wie der bei seinem Einbringen in einen Grundwerkstoff auftretenden Reibung, ein elektrisch leitender Überzug sich ablöst, sondern die elektrische Leitfähigkeit nicht verlorengeht.

(iii) Das nadelförmige elektrisch leitende Zinkoxid ist weiß, so daß durch seine gleichzeitige Verwendung mit anderen organischen Farbpigmenten oder dergleichen einem Grundwerkstoff jeder Farbton erteilt werden kann.

(iv) Da der aus elektrisch leitendem Zinkoxid bestehende Füllstoff gemäß der Erfindung nadelförmig ist, bewirkt er in einem Grundwerkstoff, wie Harz, eine mechanische Verstärkung, beispielsweise eine Verbesserung des Biegemoduls, der Schlagzähigkeit und der Zugfestigkeit.

(v) Bei dem aus nadelförmigem elektrisch leitendem Zinkoxid bestehenden Füllstoff gemäß der Erfindung treten keine Probleme hinsichtlich der Toxizität, der Entflammbarkeit oder dergleichen auf.

(vi) Da bei der Erzeugung des nadelförmigen elektrisch leitenden Zinkoxids gemäß der Erfindung das billige Zinkoxid als Ausgangsmaterial verwendet wird, kann die Erzeugung mit sehr niedrigen Kosten durchgeführt werden.

**Ansprüche**

1. Pulver aus nadelförmigem elektrisch leitendem Zinkoxid, das nach dem Kalzinieren 0,005 bis 5 Gewichtsteile mindestens eines aus Zinnoxid, Galliumoxid, Indiumoxid und Aluminiumoxid bestehenden Oxids als Dotierungsstoff pro 100 Gewichtsteile Zinkoxid enthält.

2. Verfahren zum Erzeugen von nadelförmigem elektrisch leitendem Zinkoxid, in dem eine Lösung, die eine Alkalizinkatverbindung und eine wasserlösliche Verbindung mindestens eines der Metalle Zinn, Gallium, Indium und Aluminium in einem solchen Mengenverhältnis enthält, daß nach dem Kalzinieren eine Zusammensetzung erhalten wird, die 0,005 bis 5 Gewichtsprozent mindestens eines der Metalloxide Zinnoxid, Galliumoxid, Indiumoxid und Auminiumoxid als Dotierungsstoff pro 100 Gewichtsteile Zinkoxid enthält, mit einer anorganischen Säure neutralisiert wird und die bei der Neutralisierung gebildeten Mischfällprodukte abfiltriert, gewaschen und getrocknet und dann in einer reduzierend wirkenden Atmosphäre kalziniert werden.

3. Verfahren nach Anspruch 2, dadurch gekennzeichnet, daß der Lösung, die eine Alkalizinkatverbindung und eine wasserlösliche Verbindung mindestens eines der Metalle Zinn, Gallium, Indium und Aluminium enthält, Ätznatron oder Ätzkali in einer solchen Menge zugesetzt wird, daß das Molverhältnis von Alkali zu Zink im Bereich von 5 bis 30 liegt.

4. Verfahren nach Anspruch 2 oder 3, dadurch gekennzeichnet, daß die Alkalizinkatlösung zu Beginn der Neutralisierungsreaktion eine Konzentration von 0,1 bis 4 mol/l hat und daß die Konzentration der für die Neutralisierungsreaktion verwendeten anorganischen Säure im Bereich von 5 bis 20 Gew.-% liegt.

5. Verfahren nach einem der Ansprüche 2 bis 4, dadurch gekennzeichnet, daß die Neutralisierung mit der anorganischen Säure so durchgeführt wird, daß der pH-Wert am Ende der Neutralisierungsreaktion im Bereich von 7 bis 12 liegt.

7

Europäisches Patentamt

# EUROPÄISCHER RECHERCHENBERICHT

Nummer der Anmeldung

EP 90 11 1902

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | DATABASE DERWENT WORLD PATENT INDEX, AN=81-54333D, Derwent Publications Ltd, London, GB; & JP-A-56 069 266 (NIPPON KAGAKU SANGY) * Zusammenfassung * | 1,2 | H 01 B 1/08 C 01 G 9/02 |
| A | EP-A-0 272 964 (THOMSON-CSF) * Patentansprüche 1-16 * | 1,2 | |
| P,A | EP-A-0 354 769 (TOSOH) * Insgesamt * | 1,2 | |

RECHERCHIERTE SACHGEBIETE (Int. Cl.5)

H 01 B 1
C 01 G 9

Der vorliegende Recherchenbericht wurde für alle Patentansprüche erstellt

| Recherchenort | Abschlußdatum der Recherche | Prüfer |
|---|---|---|
| DEN HAAG | 12-09-1990 | DROUOT M.C. |

EPO FORM 1503 03.82 (P0403)